# EUROPEAN PATENT APPLICATION

(11) **EP 3 992 114 A1**
(43) Date of publication of application: **04.05.2022**
(21) Application number: 19935555.3
(22) Date of filing: 23.07.2019
(51) Int. Cl.: B65G 1/04

(54) **WAREHOUSE AND SORTING SYSTEM HAVING WAREHOUSE, AND SORTING METHOD AND APPARATUS**

(30) Priority: 25.06.2019 CN 201910553597
(71) Applicant: Shanghai Quicktron Intelligent Technology Co., Ltd, Shanghai 200435 (CN)
(72) Inventor: LI, Haijun, Shanghai 200435 (CN); HU, Qiang, Shanghai 200435 (CN); FENG, Jun, Shanghai 200435 (CN)
(74) Representative: Wilson Gunn
(86) International application number: PCT/CN2019/097240
(87) International publication number: WO 2020/258429

(57) **Abstract**

A warehouse and a sorting system having the warehouse, and a sorting method and apparatus. A warehouse (100) comprises: storage layers (20) and goods sorting layers (10), the storage layers (20) and the goods sorting layers (10) being arranged at intervals from top to bottom, and each goods sorting layer (10) comprising multiple goods sorting areas (10a); a lifting apparatus (30), the lifting apparatus (30) being used for vertically moving between the storage layers (20) and the goods sorting layers (10); and a goods sorting conveying line (40), the goods sorting conveying line (40) passing through the multiple goods sorting areas (10a). By providing the storage layers (20) and the goods sorting layers (10) which are distributed at intervals in the vertical direction, function division of storage and sorting of goods in the height direction can be achieved, the three-dimension space of the warehouse (100) is fully utilized, on the one hand, the efficiency of goods sorting operation can be improved, and on the other hand, the space utilization rate of the warehouse can be improved.

## Description

The present application claims the priority to a Chinese Patent Application No. 2019105535975, filed with the China National Intellectual Property Administration on June 25, 2019 and entitled "warehouse and sorting system having warehouse, and sorting method and apparatus", which is incorporated into the present application by reference in its entirety.

### TECHNICAL FIELD

The present disclosure relates to the technical field of a warehouse, in particular to a warehouse and a sorting system having the warehouse, and a sorting method and apparatus.

### BACKGROUND

The warehouse sorting system in the related art usually needs to be provided with a forklift channel, and the goods on the upper layer of the goods shelf are transported to the goods sorting area by manually driving the forklift, for manual sorting. On the one hand, because the forklift channel occupies more space of the warehouse, the space utilization rate of the warehouse is low, thereby affecting the quantity of goods stored in the warehouse. On the other hand, due to the need to drive the forklift manually, the consumption of human resources is high, thereby affecting the goods sorting efficiency.

### SUMMARY

In order to solve one or more technical problems in the prior art, the present disclosure provides a warehouse and a sorting system having the warehouse, and a sorting method and apparatus.

In a first aspect, an embodiment of the present disclosure provides a warehouse, including: a storage layer and a goods sorting layer, wherein the storage layer and the goods sorting layer are arranged at an interval from top to bottom, and the goods sorting layer includes a plurality of goods sorting areas; a lifting apparatus, configured for vertically moving between the storage layer and the goods sorting layer; and a goods sorting conveying line, wherein the goods sorting conveying line passes through the plurality of goods sorting areas.

In an implementation, the goods sorting layer includes a plurality of groups of goods sorting shelves, and the goods sorting area is defined between any two adjacent groups of the plurality of groups of goods sorting shelves.

In an implementation, the goods sorting conveying line includes a main conveying line and an auxiliary conveying line connected to the main conveying line, wherein there are a plurality of auxiliary conveying lines provided in one-to-one correspondence with the plurality of goods sorting areas, and each of the auxiliary conveying lines extends into the goods sorting area corresponding to the auxiliary conveying line.

In an implementation, the auxiliary conveying lines are provided with load transferring workstations configured for pushing loading boxes on the auxiliary conveying lines to the goods sorting areas.

In an implementation, each of the auxiliary conveying lines includes a first auxiliary conveying line and a second auxiliary conveying line arranged side by side, a terminal end of the first auxiliary conveying line is connected to an initial end of the second auxiliary conveying line, and an initial end of the first auxiliary conveying line and a terminal end of the second auxiliary conveying line are connected to the main conveying line respectively.

In an implementation, the main conveying line includes a first main conveying line and a second main conveying line arranged side by side, a terminal end of the first main conveying line is connected to an initial end of the second main conveying line, and the first main conveying line is connected to the plurality of auxiliary conveying lines respectively.

In an implementation, each group of goods sorting shelves includes two rows of goods sorting shelves, and a transport roadway is defined between the two rows of goods sorting shelves.

In an implementation, there are a plurality of lifting apparatuses, and each of the lifting apparatuses is butted with an end of each of transport roadways.

In an implementation, each of the goods sorting layer and the storage layer is provided with a plurality of goods storage units, wherein the goods storage units are configured for placing pallets carrying goods, the pallets are provided with label indicator lights, which are configured for indicating goods information corresponding to the pallets; and accommodation spaces are provided below the goods storage units.

In a second aspect, an embodiment of the present disclosure provides a sorting system, including: a transporting vehicle; and the warehouse according to the embodiment of the present disclosure, wherein the transporting vehicle can move transversely and longitudinally in a storage layer or a goods sorting layer, and the transporting vehicle can move vertically between the storage layer and the goods sorting layer by riding a lifting apparatus.

In a third aspect, an embodiment of the present disclosure provides a sorting method, including:
determining target goods corresponding to a loading box on a goods sorting conveying line;
controlling, according to location information of the target goods, the goods sorting conveying line to convey the loading box to a goods sorting area corresponding to the location information; and
sorting the target goods to the loading box.

In an implementation, the determining the target goods corresponding to the loading box on the goods sorting conveying line, includes:
acquiring order information on the loading box; and
acquiring goods information of the target goods according to the order information, wherein the goods information includes the location information of the target goods.

In an implementation, the method further includes:
sending a label indicator light turning-on signal to a pallet corresponding to the location information, wherein the indicator light turning-on signal is used for controlling a label indicator light on the pallet to be turned on.

In a fourth aspect, an embodiment of the present disclosure provides a sorting apparatus, including:
a target goods determination module, configured for determining target goods corresponding to a loading box on a goods sorting conveying line; and
a goods sorting area determination module, configured for controlling, according to location information of the target goods, the goods sorting conveying line to convey the loading box to a goods sorting area corresponding to the location information.

In a fifth aspect, an embodiment of the present disclosure provides a sorting device, including:
one or more processors; and
a storage apparatus, configured for storing one or more programs;
wherein the one or more programs, when executed by the one or more processors, cause the one or more processors to implement the sorting method of the embodiment of the present disclosure.

In a sixth aspect, an embodiment of the present disclosure provides a computer-readable storage medium for storing computer software instructions used by a sorting device, including a program for executing the above-mentioned sorting method.

One of the above technical solutions has the following advantages or beneficial effects: by arranging the storage layer and the goods sorting layer distributed at an interval in the vertical direction, the functional division of storage and sorting of goods in the height direction can be realized, so that the stereoscopic space of the warehouse can be fully utilized. On the one hand, the efficiency of the goods sorting operation can be improved, and on the other hand, the space utilization rate of the warehouse can be improved.

### BRIEF DESCRIPTION OF DRAWINGS

FIG. 1 is a schematic plan view of a goods sorting layer of a warehouse according to an embodiment of the present disclosure;
FIG. 2 is a schematic plan view of a storage layer of a warehouse according to an embodiment of the present disclosure;
FIG. 3 is a schematic partial plan view of a goods sorting layer of a warehouse according to an embodiment of the present disclosure;
FIG. 4 is a schematic partial plan view of a goods sorting layer of a warehouse according to an embodiment of the present disclosure;
FIG. 5 is a schematic diagram of a goods sorting process of a warehouse according to an embodiment of the present disclosure;
FIG. 6 is a side view of a warehouse according to an embodiment of the present disclosure;
FIG. 7 is a side view of a warehouse according to an embodiment of the present disclosure;
FIG. 8 is a flowchart of a sorting method according to an embodiment of the present disclosure;
FIG. 9 is a flowchart of a sorting method according to an embodiment of the present disclosure;
FIG. 10 is a structural block diagram of a sorting apparatus according to an embodiment of the present disclosure; and
FIG. 11 is a structural block diagram of a sorting device according to an embodiment of the present disclosure.

### DETAILED DESCRIPTION OF EMBODIMENTS

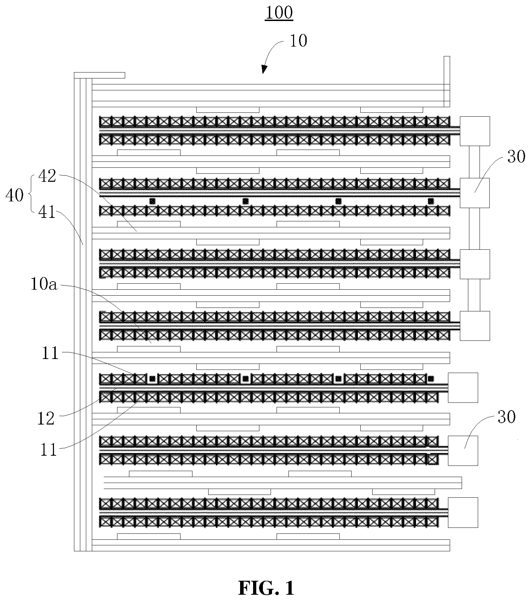

A warehouse 100 according to embodiments of the present disclosure is described below with reference to FIGS. 1-7.

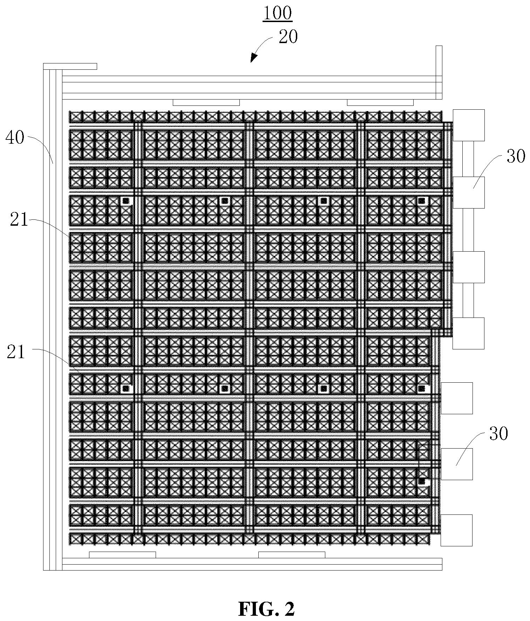

As shown in FIGS. 1 and 2, the embodiments of the present disclosure provide a warehouse 100, including a storage layer 20, a goods sorting layer 10, a lifting apparatus 30 and a goods sorting conveying line 40.

Herein, the storage layer 20 and the goods sorting layer 10 are arranged at an interval from top to bottom, and the goods sorting layer 10 includes a plurality of goods sorting areas 10a. The lifting apparatus 30 is configured for vertically moving between the storage layer 20 and the goods sorting layer 10. The goods sorting conveying line 40 passes through the plurality of goods sorting areas 10a.

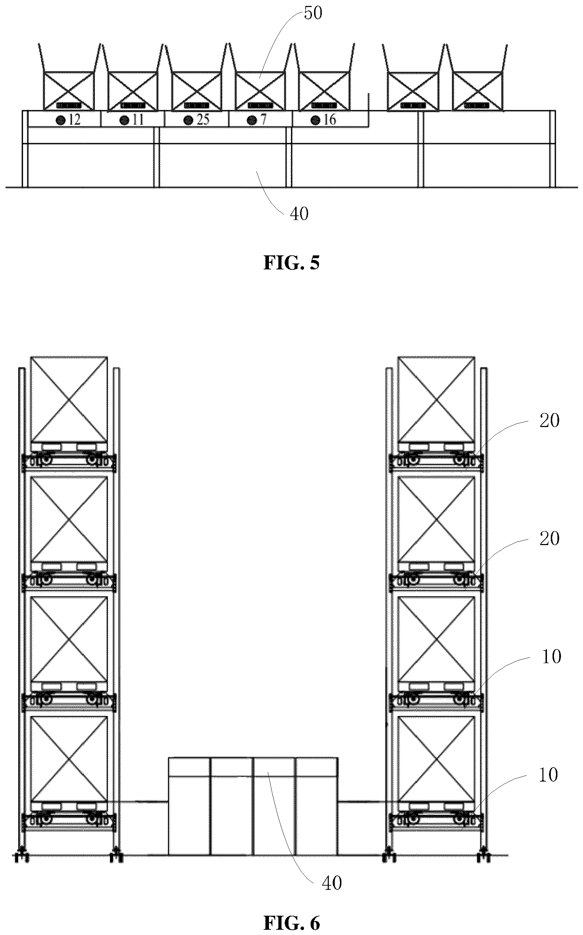

Specifically, the goods sorting layer 10 can be erected on the ground, and the goods sorting layer 10 is configured for performing the sorting and ex-warehouse of the goods in the warehouse 100 manually or mechanically. The storage layer 20 is erected above the goods sorting layer 10, and the goods to be sorted can be stored in the storage layer 20. It should be noted that the embodiments of the present disclosure do not specifically limit the number of layers of the goods sorting layer 10 and the storage layer 20. For example, in the example shown in FIG. 6, the goods sorting layer 10 may be set as two layers arranged at an interval along the vertical direction, and the storage layer 20 may be set as two layers arranged at an interval along the vertical direction. The number of layers of the goods sorting layer 10 and the storage layer 20 can be specifically set according to the size and scale of the warehouse 100 and the number of goods to be turned over.

The goods in the storage layer 20 can be transmitted to the goods sorting layer 10 through the lifting apparatus 30 by manual or mechanical transport. Preferably, the warehouse 100 of the embodiment of the present disclosure can be provided with a transporting vehicle for carrying and transmitting goods. The transporting vehicle can move transversely and longitudinally in the storage layer 20 or the goods sorting layer 10, that is, the movement directions of the transporting vehicle can be up to four, and the transporting vehicle can move vertically between the storage layer 20 and the goods sorting layer 10 by riding the lifting apparatus 30.

In an example, the lifting apparatus 30 may be an elevator. The elevator can be provided with a loading platform that moves back and forth between the goods sorting layer 10 and the storage layer 20, and the transporting vehicle can realize cross-layer movement between the goods sorting layer 10 and the storage layer 20 by riding the loading platform.

As shown in FIG. 1, the goods sorting layer 10 includes a plurality of goods sorting areas 10a, and the goods sorting conveying line 40 successively passes through the plurality of goods sorting areas 10a, to convey the loading boxes 50 (as shown in FIG. 5) to and/or out of the goods sorting areas 10a.

In an example, the goods sorting conveying line 40 may be a belt transferring mechanism, and the belt transferring mechanism successively passes through the plurality of goods sorting areas 10a. The plurality of goods sorting areas 10a are provided in the areas adjacent to the plurality of goods sorting shelves 11 in one-to-one correspondence, to facilitate the goods sorting personnel to place the goods on the goods sorting shelves 11 in the loading boxes 50 correspondingly.

According to the warehouse 100 of the embodiment of the present disclosure, by arranging the storage layer 20 and the goods sorting layer 10 distributed at an interval in the vertical direction, the functional division of storage and sorting of goods in the height direction can be realized, so that the stereoscopic space of the warehouse 100 can be fully utilized. On the one hand, the goods sorting working planes can be flexibly arranged, and the number of and area of the goods sorting working planes can be improved, thereby improving the efficiency of the goods sorting working planes. On the other hand, the quantity of goods stored in the warehouse 100 can be increased and the quantity of goods stored per unit area can be greatly increased, thereby realizing the dense arrangement storage of goods per unit area and thus improving the space utilization rate of the warehouse 100. Moreover, by providing the lifting apparatus 30, the replenishment of goods from the storage layer 20 to the goods sorting layer 10 can be realized, thereby realizing the cross-layer scheduling of goods from the storage layer 20 to the goods sorting layer 10.

In addition, by providing the plurality of goods sorting areas 10a in the goods sorting layer 10 and providing the goods sorting conveying line 40 passing through the plurality of goods sorting areas 10a, the loading boxes 50 can be automatically transmitted to the plurality of goods sorting areas 10a, to facilitate loading the target goods into the loading boxes 50 without manually transporting the loading boxes 50, which greatly reduces the consumption of human resources and has a high degree of automation.

In an implementation, the goods sorting layer 10 shown in FIG. 1 includes a plurality of groups of goods sorting shelves 11, and a goods sorting area 10a is defined between any two adjacent groups of the plurality of groups of goods sorting shelves 11.

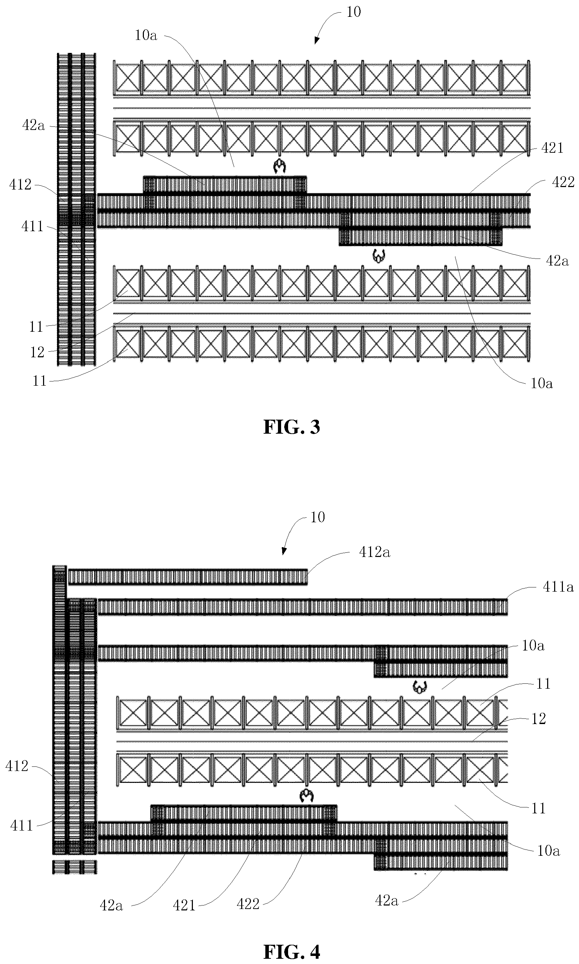

In an example, the goods sorting conveying line 40 includes a main conveying line 41 and an auxiliary conveying line 42 connected to the main conveying line 41. Herein, there are a plurality of auxiliary conveying lines 42 provided in one-to-one correspondence with the plurality of goods sorting areas 10a, and each of the auxiliary conveying lines 42 extends into the corresponding goods sorting area 10a, such that the loading boxes 50 can pass through each goods sorting area 10a along the main conveying line 41 and the auxiliary conveying line 42. Preferably, as shown in FIG. 3, each of the auxiliary conveying lines 42 is provided with a plurality of load transferring workstations 42a. The plurality of load transferring workstations 42a correspond to different goods sorting areas 10a of the goods sorting areas 10a, and the load transferring workstations 42a are configured for pushing the loading boxes 50 from the auxiliary conveying line 42 to the corresponding goods sorting area 10a.

In an example, as shown in FIG. 3, each of the auxiliary conveying lines 42 includes a first auxiliary conveying line 421 and a second auxiliary conveying line 422 arranged side by side. The terminal end of the first auxiliary conveying line 421 is connected to the initial end of the second auxiliary conveying line 422, and the initial end of the first auxiliary conveying line 421 and the terminal end of the second auxiliary conveying line 422 are connected to the main conveying line 41 respectively.

Specifically, the main conveying line 41 may extend longitudinally and be located on the transverse side of the plurality of groups of goods sorting shelves 11, the plurality of auxiliary conveying lines 42 extend transversely into the plurality of goods sorting areas 10a, and each of the auxiliary conveying lines 42 is connected to the main conveying line 41. Each of the auxiliary conveying lines 42 includes a first auxiliary conveying line 421 and a second auxiliary conveying line 422 arranged side by side, and the conveying direction of the first auxiliary conveying line is opposite to the conveying direction of the second auxiliary conveying line 422. The initial end and the terminal end of the first auxiliary conveying line 421 are the starting point and the ending point of its conveying direction respectively, and the initial end and the terminal end of the second auxiliary conveying line 422 are the starting point and the ending point of its conveying direction respectively. Thus, the loading boxes 50 can be transferred from the main conveying line 41 to the first auxiliary conveying line, then to the second conveying line, and then back to the main conveying line 41, thereby completing the conveyance of the loading boxes 50 in the goods sorting area 10a corresponding to the auxiliary conveying line 42.

In an example, as shown in FIG. 3, the main conveying line 41 includes a first main conveying line 411 and a second main conveying line 412 arranged side by side. The terminal end of the first main conveying line 411 is connected to the initial end of the second main conveying line 412, and the first main conveying line 411 is connected to the plurality of auxiliary conveying lines 42 respectively.

That is, the conveying direction of the first main conveying line 411 is opposite to the conveying direction of the second main conveying line 412, and the terminal end of the first main conveying line 411 is connected to the initial end of the second auxiliary conveying line 422. The first main conveying line 411 is responsible for transmitting the loading boxes 50 to the respective auxiliary conveying lines 42 successively, and then to the respective goods sorting areas 10a through the auxiliary conveying line 42. The second main conveying line 412 is responsible for transmitting, to the target area, the fully loaded loading boxes 50 after the goods sorting operation is completed.

Preferably, as shown in FIG. 4, an empty box goods replenishment point 411a is provided in the area adjacent to the initial end of the first main conveying line 411, and a full box transportation departure point 412a is provided in the area adjacent to the terminal end of the second main conveying line 412. The empty loading box 50 can be placed at the initial end of the first main conveying line 411 by manual or mechanical transporting at the empty box goods replenishment point 411a. The fully loaded loading box 50 can be transported away from the terminal end of the second main conveying line 412 by manual or mechanical transporting at the full box transportation departure point 412a.

In an implementation, as shown in FIG. 3, the goods sorting layer 10 includes a plurality of groups of goods sorting shelves 11, a transport roadway 12 is defined between two goods sorting shelves 11 in each group of goods sorting shelves, and the transporting vehicle can move on the transport roadway 12.

In an example, a plurality of goods sorting shelves 11 are arranged in a plurality of groups longitudinally at an interval. Each group includes two goods sorting shelves 11 arranged longitudinally at an interval. Each of the goods sorting shelves 11 extends transversely. The transport roadway 12 extending transversely is defined between the two goods sorting shelves 11 in each group, and the transport roadway 12 is communicated with the goods storage unit of each of the goods sorting shelves 11, such that the transporting vehicle travels to the accommodation space below the goods storage unit through the transport roadway 12, to transmit pallets carrying goods or transport the pallets carrying goods away.

In an implementation, as shown in FIG. 1, there are a plurality of lifting apparatuses 30 and each lifting apparatus 30 is butted with an end of each transport roadway 12. For example, the goods sorting shelves 11 can be set as 7 groups, and there are 7 corresponding transport roadways 12. 7 lifting apparatuses 30 can also be set correspondingly, and each lifting apparatus 30 is located at an end of the transport roadway 12 corresponding to the lifting apparatus 30, and is butted with the transport roadway 12. In this way, through a certain lifting apparatus 30, the transporting vehicle can directly enter into the transport roadway 12 corresponding to the lifting apparatus 30 from the storage layer 20, and transmit the pallets onto a group of goods sorting shelves 11 corresponding to the transport roadway 12. Therefore, each group of goods sorting shelves 11 has the transport roadway 12 and the lifting apparatus 30 corresponding to the group of goods sorting shelves 11, so that the traveling path of the transporting vehicle from the storage layer 20 to each group of goods sorting shelves 11 for goods replenishment is short and the efficiency of the goods replenishment is high.

In an implementation, the storage layer 20 includes a plurality of storage shelves 21, the goods sorting layer 10 includes a plurality of goods sorting shelves 11, each of the goods sorting shelves 11 and the storage shelves 21 is provided with goods storage units, the goods storage units are configured for placing the pallets carrying goods, and the transporting vehicle can transport the pallets away from the goods storage units or place the pallets in the goods storage units.

For example, the goods storage unit may be configured as a bracket for supporting the pallet, and the upper surface of the pallet is used for carrying goods. During the goods sorting operation, the transporting vehicle transports the pallets placed on the goods storage units of the storage shelves 21 away, then moves to the goods sorting layer 10 through the lifter, and then places the pallets on the goods storage units of the goods sorting shelves 11, to complete the goods replenishment from the storage layer 20 to the goods sorting layer 10. At the same time, after the pallets on a certain goods storage unit of the storage shelves 21 are transported away, the goods replenishment needs to be performed on the goods storage unit. The transporting vehicle transmits the pallets carrying goods outside the warehouse to the storage layer 20 through the lifting apparatus 30, and then places the pallets on the goods storage unit, to complete the goods replenishment of the storage layer 20.

In an implementation, accommodation spaces are provided below the goods storage unit, and the transporting vehicle can travel to the accommodation space, to transport the pallets away or place the pallets, and then transport the goods away or place the goods.

In order that the pallets can be transported away or placed in a case where the transporting vehicle moves to the accommodation space, in an example, the transporting vehicle may be provided with a liftable raising mechanism. In the process of the transporting vehicle transporting the pallets away from the goods storage unit, the transporting vehicle travels to the accommodation space, and the raising mechanism extends out of the upper surface of the transporting vehicle and is butted with the lower surface of the pallet to raise the pallet from the goods storage unit. At this time, the pallet is separated from the goods storage unit, and the transporting vehicle can transport the pallet away. In the process of the transporting vehicle placing the pallet on the goods storage unit, the transporting vehicle travels to the accommodation space. At this time, the pallet carrying the goods is placed on the raising mechanism, and the pallet is located above the goods storage unit. The raising mechanism descends to place the pallet on the goods storage unit.

Further, the storage layer 20 is provided with a track for traveling of the transporting vehicle. The track is butted with the lifting apparatus 30, and the accommodation space under each goods storage unit of the storage shelves 21 is butted with the track. For example, the track may include a transverse track and a longitudinal track which are connected with each other. The longitudinal track is butted with the lifting apparatus 30. There may be a plurality of transverse tracks provided side by side, and each transverse track may be located between two adjacent groups of goods storage shelves 21. In this way, when the transporting vehicle transports the pallet loaded with goods, the transporting vehicle can move back and forth between the goods storage unit and the lifting apparatus 30 through the track.

In an implementation, the pallets are provided with label indicator lights, and the label indicator lights are configured for indicating goods information corresponding to the pallets.

Specifically, the loading box 50 can be pasted with an order bar code. By scanning the order bar code with a bar code scanner, the goods information of the target goods to be loaded by the loading box 50 can be acquired. At the same time, the label indicator light on the pallet on the goods sorting shelves 11 corresponding to the target goods is lightened, so as to identify the pallet corresponding to the target goods to be loaded by the loading box 50. Herein, the goods information can include the category of the goods and the number of the goods.

Referring to FIG. 5 below, the goods sorting process of the goods sorting personnel is described with a specific example. There may be provided with a plurality of groups of loading boxes 50, and each group of loading boxes 50 is successively placed on the goods sorting conveying line 40, for goods sorting operation. Each group includes five loading boxes 50, and the five loading boxes 50 correspond to different serial numbers respectively. The goods sorting personnel scan the order bar codes on the five loading boxes 50 simultaneously through a bar code scanner, to obtain the goods information of the target goods corresponding to the five loading boxes 50. At the same time, a corresponding goods sorting area 10a is assigned to each loading box 50, and the label indicator light on the pallet, corresponding to the target goods of the loading box 50, at the goods sorting area 10a is lightened. The goods sorting conveying line 40 transports the five loading boxes 50 to the corresponding goods sorting areas 10a. The goods sorting personnel load the target goods into the loading boxes 50 according to the label indicator light. After the loading is completed, the goods sorting personnel put the loading boxes 50 back to the goods sorting conveying line 40. It should be noted that each loading box 50 can correspond to a plurality of goods sorting areas 10a. The goods sorting conveying line 40 successively conveys each loading box 50 to the plurality of goods sorting areas 10a, and then the goods sorting personnel sort the goods. After the goods sorting task of the loading box 50 is completed, the loading box 50 is transmitted by the goods sorting conveying line 40 to the full box transportation departure point for ex-warehouse operation.

After the goods on the pallet at a certain goods sorting shelf 11 of the goods sorting layer 10 are emptied, the pallet can be transported away from this goods sorting shelf 11 by a transporting vehicle, while the goods can be replenished from the storage layer 20 to this goods sorting shelf 11 by another transporting vehicle. In order to facilitate the management and intake of empty pallets, the warehouse 100 is also provided with an empty pallet collection area. The transporting vehicle can transmit the empty pallets, whose goods have been emptied, on the goods sorting shelves 11 to the empty pallet collection area. The empty pallet collection area may be provided in the goods sorting layer 10 or the storage layer 20. For example, the empty pallet collection area may be provided in the goods sorting area 10a, in the area adjacent to the goods sorting conveying line 40, or in the area adjacent to the lifting apparatus 30. Preferably, the empty pallet collection area is provided in the area adjacent to the goods sorting conveying line 40, such that the empty pallet passes through the goods sorting conveying line 40 to complete the ex-warehouse operation.

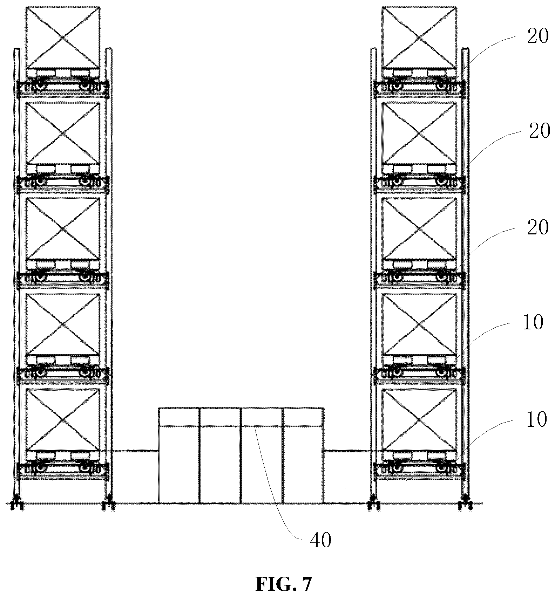

In a specific example, as shown in FIGS. 6 and 7, the area of the warehouse 100 is 3500 m², the height of the warehouse 100 is 9 m, and the size of the pallet is 1.2 m^{∗}1 m. The goods sorting layer 10 has two layers, and the goods sorting layer 10 is provided with 820 goods storage units. The distance between two goods sorting shelves 11 in each group of goods sorting shelves 11 is 4.21 m, the width of the auxiliary conveying line 42 is 2.66 m, and each of the distances between the auxiliary conveying line 42 and the two goods sorting shelves 11 is 0.775 m. The goods sorting area 10a can be provided with a goods sorting platform with a height of 0.85 m, such that the goods sorting personnel stand and pick up goods from the second layer of the goods sorting layer 10.

In addition, the number of the storage layers 20 and the number of the goods storage units of the storage shelves 21 can be set according to the height of the goods. For example, if the height of goods does not exceed 1.35 m, as shown in FIG. 6, the goods sorting layer 10 can be provided as two layers, the storage layer 20 can be provided as two layers, and the storage layer 20 is provided with a total of 1744 goods storage units. If the height of goods does not exceed 1 m, as shown in FIG. 7, the goods sorting layer can be provided as two layers, the storage layer 20 can be provided as three layers, and the storage layer 20 is provided with a total of 2616 goods storage units.

A sorting system according to an embodiment of the present disclosure is described below.

The embodiment of the present disclosure provides a sorting system, including a transporting vehicle and the warehouse 100 according to the above embodiment of the present disclosure. Herein, the transporting vehicle can move transversely and longitudinally in the storage layer 20 or the goods sorting layer 10, and the transporting vehicle can move vertically between the storage layer 20 and the goods sorting layer 10 by riding the lifting apparatus 30.

In an example, the transporting vehicle may be provided with transverse traveling wheels and longitudinal traveling wheels. Herein, the transverse traveling wheels are configured for driving the transporting vehicle to move left or right in the transverse direction, and the longitudinal traveling wheels are configured for driving the transporting vehicle to move forward or backward in the longitudinal direction. Thus, there are many traveling paths of the transporting vehicle on the storage layer 20 or the goods sorting layer 10, and the scheduling in the warehouse is more flexible, which is conducive to the execution of complex operation logic in the warehouse and the high operation efficiency. In addition, the embodiment of the present disclosure does not limit the number of the transporting vehicles, for example, there may be a plurality of transporting vehicles, so as to improve the efficiency of transporting goods.

In an implementation, the sorting system is further provided with a charging station for charging the transporting vehicle. Herein, the number of the charging station can be calculated according to the number of the transporting vehicle, the battery usage time, the charging time, the goods sorting peak time efficiency and the charging strategy.

The working principle of the sorting system is described in detail below with a specific example.

A warehouse management system receives the goods delivery information, and then an instruction is sent by a warehouse control system to the transporting vehicle, to control the transporting vehicle to transport the empty loading boxes 50 to the goods sorting conveying line 40. The goods sorting conveying line 40 transmits the loading boxes 50 to the goods sorting areas 10a corresponding to the goods to be loaded by the loading boxes 50 respectively. The fully loaded loading boxes 50 after the goods sorting is completed pass through the goods sorting conveying line 40, for the ex-warehouse operation.

The goods sorting personnel scan the order bar code on the loading box 50 to acquire the order information, and then loads the target goods on the pallet with the label indicator light lightened to the loading box 50. If the goods on the pallet have been emptied, the goods sorting personnel sends a goods pickup instruction through the warehouse management system, and the transporting vehicle transports the goods on the storage layer 20 onto the goods sorting shelf 11 of the goods sorting layer 10 through the lifting apparatus 30; at the same time, the transporting vehicle transports the pallet whose goods have been emptied away from the goods sorting shelf 11. If the goods in the storage layer 20 have been emptied, the warehouse management system sends a goods replenishment instruction, and controls the transporting vehicle to convey the pallets carrying goods outside the warehouse to the lifting apparatus 30 through the in-warehouse conveying line; and then the transporting vehicle transmits the pallets to the storage shelves 21 of the storage layer 20 through the lifting apparatus 30.

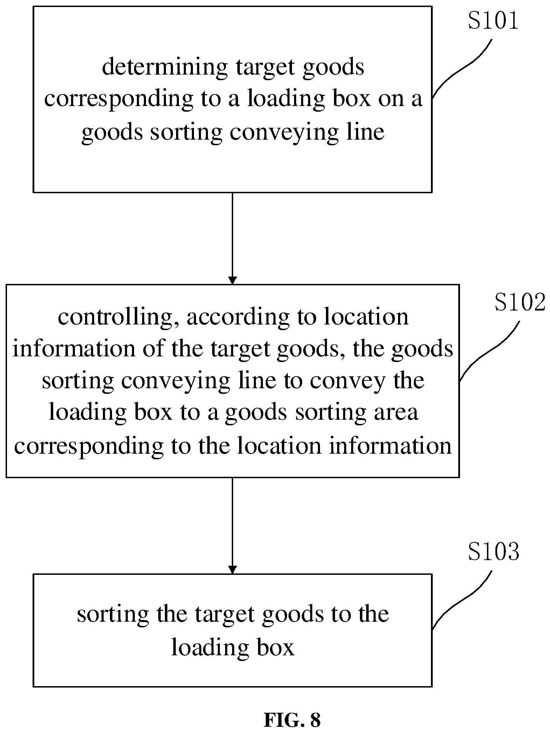

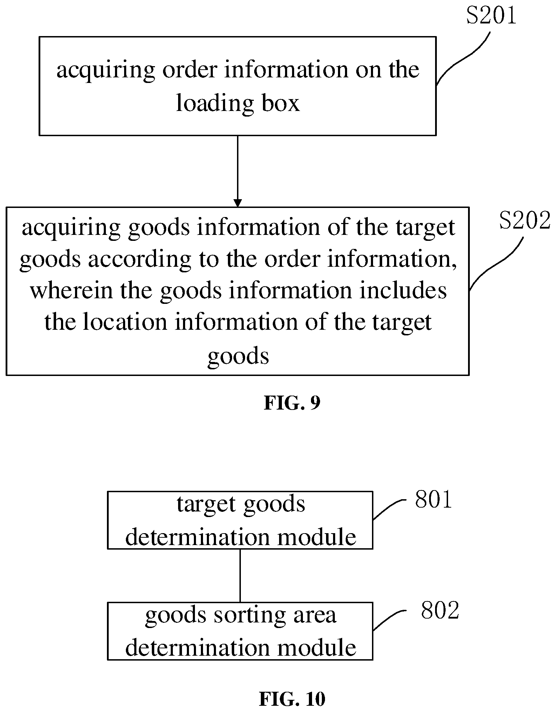

A sorting method according to an embodiment of the present disclosure is described below with reference to FIGS. 8 and 9.

As shown in FIG. 8, the embodiment of the present disclosure provides a sorting method, including:
S101: determining target goods corresponding to a loading box 50 on a goods sorting conveying line 40; wherein the target goods can be goods to be loaded by the loading box 50;
S102: controlling, according to location information of the target goods, the goods sorting conveying line 40 to convey the loading box 50 to a goods sorting area 10a corresponding to the location information; and S103: sorting the target goods to the loading box 50.

It should be noted that there can be a plurality of goods sorting areas 10a, and the location information is the goods information corresponding to different goods sorting areas 10a. According to the location information, the goods sorting areas 10a corresponding to the target goods of the loading boxes 50 can be determined, and the loading boxes 50 are successively conveyed to the goods sorting areas 10a corresponding to the target goods through the goods sorting conveying line 40. In addition, "sorting the target goods to the loading box 50" can perform goods sorting operation manually or mechanically, which is not specifically limited in the embodiment of the present disclosure.

In an implementation, as shown in FIG. 9, the operation of determining the target goods corresponding to the loading box 50 on the goods sorting conveying line 40 in S101 includes:
S201: acquiring order information on the loading box 50; wherein the order information can be acquired by the goods sorting personnel scanning the order bar code on the loading box 50 with a bar code scanner; and
S202: acquiring goods information of the target goods according to the order information, wherein the goods information includes the location information of the target goods.

In an implementation, the sorting method further includes:
sending a label indicator light turning-on signal to a pallet corresponding to the location information, wherein the indicator light turning-on signal is used for controlling a label indicator light on the pallet to be turned on. Thus, the goods sorting personnel can determine the pallet corresponding to the target goods through whether the label indicator light is turned on, so as to facilitate the goods sorting personnel to carry out the goods sorting operation.

A sorting apparatus according to an embodiment of the present disclosure is described below with reference to FIG. 10. The sorting apparatus of the embodiment of the present disclosure is configured for realizing the sorting method according to the embodiment of the present disclosure.

As shown in FIG. 10, the embodiment of the present disclosure provides a sorting apparatus, including:
a target goods determination module 801, configured for determining target goods corresponding to a loading box 50 on a goods sorting conveying line 40; and
a goods sorting area determination module 802, configured for controlling, according to location information of the target goods, the goods sorting conveying line 40 to convey the loading box 50 to a goods sorting area 10a corresponding to the location information.

In an implementation, the sorting apparatus further includes:
an order information acquisition apparatus, configured for acquiring order information on the loading box 50; and
a goods information acquisition apparatus, configured for acquiring goods information of the target goods according to the order information, wherein the goods information includes the location information of the target goods.

In an implementation, the sorting apparatus further includes:
an indicator light turning-on signal sending apparatus, configured for sending a label indicator light turning-on signal to a pallet corresponding to the location information, wherein the indicator light turning-on signal is used for controlling a label indicator light on the pallet to be turned on.

The function of each module in each apparatus of the embodiment of the present disclosure can be referred to the corresponding description in the above method, which will not be repeated here.

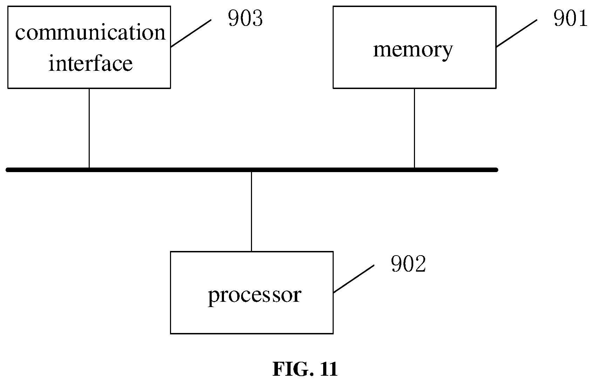

FIG. 11 shows a structural block diagram of a sorting device according to an embodiment of the present disclosure.

As shown in FIG. 11, the device may include a memory 901 and a processor 902, and the memory 901 stores a computer program that can be run on the processor 902. The processor 902, when executing the computer program, implements the article generation method in the above embodiment. The number of the memory 901 and the processor 902 may be one or more.

The device may also include:
a communication interface 903, configured for communicating with an external device, for data interactive transmission.

The memory 901 may include a high-speed random access memory (RAM), and may also include a non-volatile memory, for example at least one disk memory.

If the memory 901, the processor 902 and the communication interface 903 are implemented independently, the memory 901, the processor 902 and the communication interface 903 can be connected to each other and communicate with each other through a bus. The bus can be an industry standard architecture (ISA) bus, a peripheral component interconnect (PCI) bus, an extended industry standard architecture (EISA) bus, etc. The bus may include an address bus, a data bus, a control bus, and the like. For representation, only one thick line is used to indicate the bus in FIG. 11, but it does not mean that there is only one bus or one type of bus.

Optionally, in a specific implementation, if the memory 901, the processor 902 and the communication interface 903 are integrated on a chip, the memory 901, the processor 902 and the communication interface 903 can communicate with each other through an internal interface.

An embodiment of the present disclosure provides a computer-readable storage medium storing a computer program. The computer program, when executed by a processor, implements the method described in any one of the above embodiments.

The above are only the preferred embodiments of the present disclosure. It should be noted that the above preferred implementations should not be regarded as limitations of the present disclosure, and the protection scope of the present disclosure should be based on the scope defined by the claims. For those skilled in the art, without departing from the spirit and scope of the present disclosure, several improvements and modifications can also be made, and these improvements and modifications should also be regarded as the protection scope of the present disclosure.

## Claims

1. A warehouse, comprising:
a storage layer and a goods sorting layer, wherein the storage layer and the goods sorting layer are arranged at an interval from top to bottom, and the goods sorting layer comprises a plurality of goods sorting areas;
a lifting apparatus, configured for vertically moving between the storage layer and the goods sorting layer; and
a goods sorting conveying line, wherein the goods sorting conveying line passes through the plurality of goods sorting areas.

2. The warehouse of claim 1, wherein the goods sorting layer comprises a plurality of groups of goods sorting shelves, and the goods sorting area is defined between any two adjacent groups of the plurality of groups of goods sorting shelves.

3. The warehouse of claim 2, wherein the goods sorting conveying line comprises a main conveying line and an auxiliary conveying line connected to the main conveying line, wherein there are a plurality of auxiliary conveying lines provided in one-to-one correspondence with the plurality of goods sorting areas, and each of the auxiliary conveying lines extends into the goods sorting area corresponding to the auxiliary conveying line.

4. The warehouse of claim 3, wherein the auxiliary conveying lines are provided with load transferring workstations configured for pushing loading boxes on the auxiliary conveying lines to the goods sorting areas.

5. The warehouse of claim 3, wherein each of the auxiliary conveying lines comprises a first auxiliary conveying line and a second auxiliary conveying line arranged side by side, a terminal end of the first auxiliary conveying line is connected to an initial end of the second auxiliary conveying line, and an initial end of the first auxiliary conveying line and a terminal end of the second auxiliary conveying line are connected to the main conveying line respectively.

6. The warehouse of claim 3, wherein the main conveying line comprises a first main conveying line and a second main conveying line arranged side by side, a terminal end of the first main conveying line is connected to an initial end of the second main conveying line, and the first main conveying line is connected to the plurality of auxiliary conveying lines respectively.

7. The warehouse of claim 2, wherein each group of goods sorting shelves comprises two rows of goods sorting shelves, and a transport roadway is defined between the two rows of goods sorting shelves.

8. The warehouse of claim 7, wherein there are a plurality of lifting apparatuses, and each of the lifting apparatuses is butted with an end of each of transport roadways.

9. The warehouse of claim 1, wherein each of the goods sorting layer and the storage layer is provided with a plurality of goods storage units, wherein the goods storage units are configured for placing pallets carrying goods, the pallets are provided with label indicator lights, which are configured for indicating goods information corresponding to the pallets; and accommodation spaces are provided below the goods storage units.

10. A sorting system, comprising:
a transporting vehicle; and
the warehouse of any one of claims 1 to 9, wherein the transporting vehicle moves transversely and longitudinally in the storage layer or the goods sorting layer, and the transporting vehicle moves vertically between the storage layer and the goods sorting layer by riding the lifting apparatus.

11. A sorting method, comprising:
determining target goods corresponding to a loading box on a goods sorting conveying line;
controlling, according to location information of the target goods, the goods sorting conveying line to convey the loading box to a goods sorting area corresponding to the location information; and
sorting the target goods to the loading box.

12. The method of claim 11, wherein the determining the target goods corresponding to the loading box on the goods sorting conveying line, comprises:
acquiring order information on the loading box; and
acquiring goods information of the target goods according to the order information, wherein the goods information comprises the location information of the target goods.

13. The method of claim 11, further comprising:
sending a label indicator light turning-on signal to a pallet corresponding to the location information, wherein the indicator light turning-on signal is used for controlling a label indicator light on the pallet to be turned on.

14. A sorting apparatus, comprising:
a target goods determination module, configured for determining target goods corresponding to a loading box on a goods sorting conveying line; and
a goods sorting area determination module, configured for controlling, according to location information of the target goods, the goods sorting conveying line to convey the loading box to a goods sorting area corresponding to the location information.

15. A sorting device, comprising:
one or more processors; and
a storage apparatus, configured for storing one or more programs;
wherein the one or more programs, when executed by the one or more processors, cause the one or more processors to implement the method of any one of claims 11 to 13.

16. A non-volatile computer-readable storage medium storing a computer program, wherein the computer program, when executed by a processor, implements the method of any one of claims 11 to 13.
